# EUROPEAN PATENT APPLICATION

(11) **EP 1 265 438 A1**
(43) Date of publication of application: **11.12.2002**
(21) Application number: 01305013.3
(22) Date of filing: 08.06.2001
(51) Int. Cl.: H04N 5/445

(54) **A method for providing an associative list and/or multiple concurrent web pages on a full screen web browser device**

(71) Applicant: Pace Micro Technology PLC, Saltaire, Shipley, BD14 3LF (GB)
(72) Inventor: Hodgkinson, Andrew, Cambridge, CB4 1JA (GB)
(74) Representative: Wood, Graham

(57) **Abstract**

The invention relates to a television system which typically includes a broadcast data receiver connected to or provided integrally with a television display screen. The system is provided with an internet capability and the invention allows the user of the capability to identify information relating to each of the internet page windows which are live and selectable for display across the screen at that instant by the generation of an information display which includes bibliographic data for each of the page windows. This therefore allows the system which hallows only one page window to be viewed at a time on the screen to be more user friendly.

## Description

The invention to which this application relates is to the provision of an internet browser capability, provided as part of a broadcast data receiver apparatus, typically, but not necessarily exclusively, connected to or formed as part of a television set, through the screen of which the use of the browser can be controlled and displayed to the viewer.

When using an internet browser it is well known to utilise a number of "windows" which can be simultaneously displayed on portions of the screen. A window is typically a portion of the screen which is defined and displays subject matter relating to a particular web site or web site page of data. A number of said windows can be open at one time, either fully or partially positioned over other windows. The user can then select which of the windows is to be live and navigable at any instant.

With personal computer (PC) apparatus with a web browser running, the user is able to have multiple windows open which show various web pages at the same time. The user is able to see the different windows at once by resizing the pages to fit alongside each other, or to have them stacked on top of each other as discussed above. In any case the user can select which of the windows they want to read by clicking on the title bar of the window or clicking on the window's icon on the icon bar at the bottom of the screen. This brings the window to the top of the stack to be the "live" window.

However this ordering and selection of windows cannot be easily achieved when the internet browser is provided as part of the broadcast data receiver and the television screen is used to display the windows due to problems with resolution and so there is no easy way to switch between or manage multiple windows in the same manner as with PC apparatus. The use of the television screen to display the internet windows has therefore created significant and specific problems as the user environment is very different. There is no icon display bar as in the PC apparatus which can be used as a short cut to allow the selection of specific windows or functions and, furthermore the user has no title bars to select or a pointer in the traditional sense. This has therefore conventionally made the use and selection of different parts of information display to be difficult and has meant that the use of internet browsers via broadcast data receivers has largely been a single tasking interface where all web browsing is done in a single main window which is displayed. This tends to limit the adaptability and speed of use of the facility.

There is thus a demand for simple, embedded devices that provide PC based web browsing features to users of a standard domestic television screen connected to a web browser facility. Form factors vary from stand-alone set-top boxes to integrated televisions with web browsers. Frequently these devices use the whole of the television display for showing a single web page, but since some web sites generate "pop-up" pages that must be open at the same time as the "parent" web page, a single page approach is not sufficient to navigate all sites on the world wide web.

Unfortunately these "pop-up" pages of one kind or another are provided to allow the performance of essential tasks; for example, logging on to the user's account with that web site. A system that only allows one page at a time cannot deal with such web sites. Indeed, even if the system was allowed to support multiple concurrent web pages to get around such sites, a large number of interaction problems between the user and the device present themselves, arising not only from a desire to keep the system easy to use, but also from the limited control offered by the control means which are typically in the form of a conventional infra-red handset of the type used to perform the control of the television set and/or broadcast data receiver.

The aim of the present invention is to provide a method and system which allow the support of multiple and/or pop-up pages that solves many of these interaction issues.

In a first aspect of the invention there is provided a television system including a broadcast data receiver and an internet access capability, said capability, when accessed allowing the opening and retention of at least two windows of data for selected display on a display screen, each window displaying a page from an internet site and characterised in that upon the system user selecting and opening a window for viewing, an information display is generated by the system, said information display including a bibliography of data for each of the windows which are and selectable for viewing at that instant and said information display selectable by the user for viewing.

In one embodiment the selection is made via a defined key or keys on a remote control device for the apparatus, or alternatively by selecting a particular icon displayed on screen via an icon displayed on the display screen.

Typically, individual, concurrently open web pages are not displayed in the conventional fashion (a parent web page with pop-up visible in front of it), but are displayable in full, separately, with an implementation defined method provided to select between those windows with internet pages which are open. The user interface interactions of a single web page system can be maintained entirely, as the user only sees one page at a time. Any errors which relate to a particular page are only shown when the user selects to view that particular page. A computer-like notion of "tabs" relating to available pages is not used, as this is considered too complex and too demanding on the limited screen space available to television-base web browsing devices.

In one embodiment of the invention all currently open parent and pop-up web pages can be displayed one at a time, with a control allowing the user to move between them, as if viewing each web page on a separate page of a flip chart. This is generally a successful method, providing a lot of flexibility with very few extra complications for a user with comparison to a conventional single page-only devices

In one embodiment therefore each of the windows available for selection can be selected to be displayed in a sequential manner on the screen. Preferably the user can stop the sequential display to select to view one page for a longer period of time.

However since only one page is shown at a time it is desirable for the user to be able to get a list of all available pages, but there is then the problem of how to associate the pages with the items shown in a list and this is solved by the invention in the preferred embodiment wherein the information display of bibliographic data for each of the selectable windows is provided to the user.

In one embodiment the bibliographic data for each window is based on any, or any combination of, the title embedded in the HTML (Hyper-Text Mark-up Language), data comprising the page (if any), the location from which the page was fetched (its address or URL - Uniform resource Locator) and/or a scaled image view of the page.

If a scaled image is provided it allows the user to predict the content of the window if selected for screen display and for this reason it is preferred that this is included.

Thus, this invention provides a method whereby a list of available pages may be presented to the user, offering enough information to provide a concrete association between the list and the individual web pages the device has made available.

The provision of the scaled image, also referred to as a "thumbnail image" allows the user an opportunity of being able to at least arrive at a prediction at what the page represents, particularly if the title of the page is present and informative (though sometimes they are either absent or contain something abstract, like a list of internet search engine key words).

The thumbnail image can be fairly readily implemented by any web browser that implements a backing store memory method for applying the page to be displayed on the screen. Backing store memory, despite requiring a relatively large amount of RAM, are already used in broadcast data receiver based web browsers as use of them can eliminate unpleasant flicker when the page displays are being redrawn during the initial fetching of web pages. When asked to produce the list of available web pages, the web browser can render each one into the backing store, then scale the result down to form a thumbnail image.

Thus in one embodiment, an intelligent implementation would, for pages which are set to a specific width and height that is smaller than the whole of the display, only scale the region actually used by the page to achieve a higher detail thumbnail image.

Whilst this may still lead to an unfamiliar list of items for brand new pages, users would quickly get used to the way the information display is presented for sites they had visited before, in particular the use of the thumbnail provides an important visual cue. Between this, the title and the URL, there is a very high chance that the user will find the list easy to use and readily associate the same with the web page windows which are live, available to be selected and their relative positions.

In one embodiment each of the windows available for display is allocated a unique identifier which is displayed in the information display page next to the appropriate bibliographic data and is displayed when the appropriate page has been selected for screen display.

A typical presentation of this embodiment would be of a numbered list. The number is positioned on the left, next to it the title of the page with the URL underneath it, and the thumbnail image is placed on the right. If there is room for it in the user interface design of the web browsing device, the number shown in the list can also be displayed when the user is looking at the page to which the list item relates. This provides a final fourth correlation between the list items and the pages themselves.

A specific embodiment of the invention is now described with reference to the accompanying diagrams, wherein
Figures 1-3 illustrate individual web page windows for display, and
Figure 4 illustrate an information display in accordance with one embodiment of the invention.

The use of a television system with a broadcast data receiver to allow the capability of world wide web internet access viewed via a television screen connected to or formed integrally with the broadcast data receiver is known.

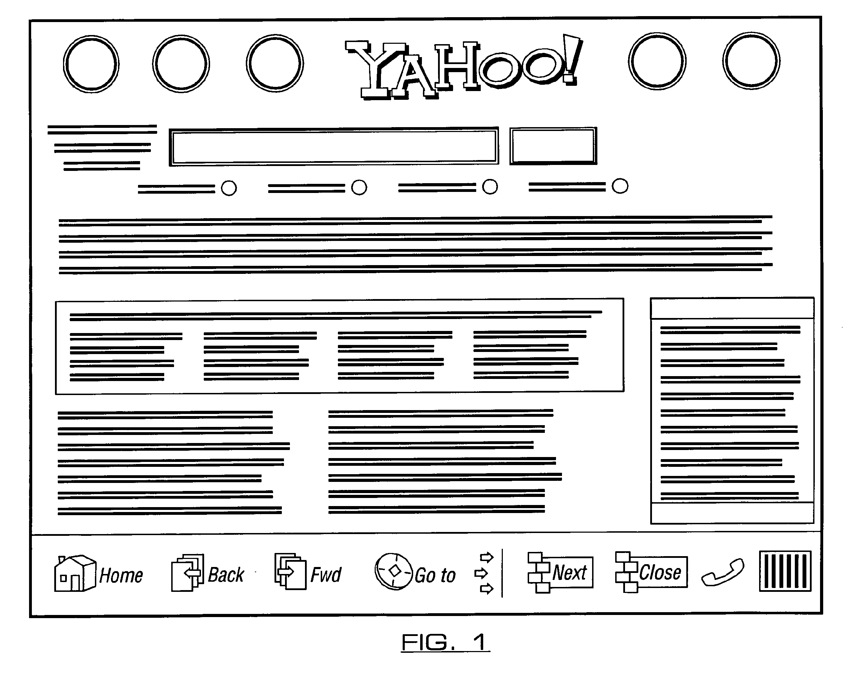

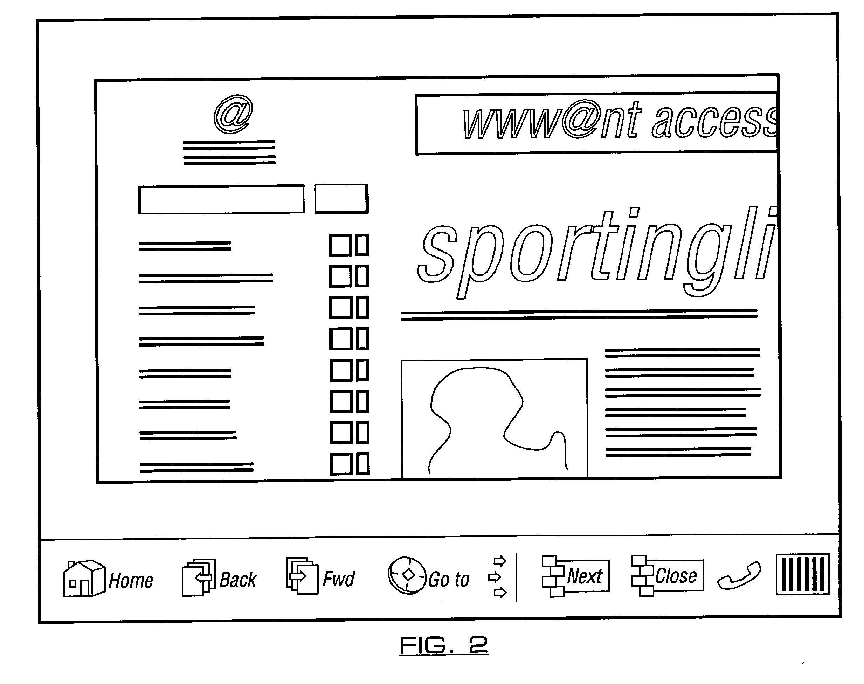

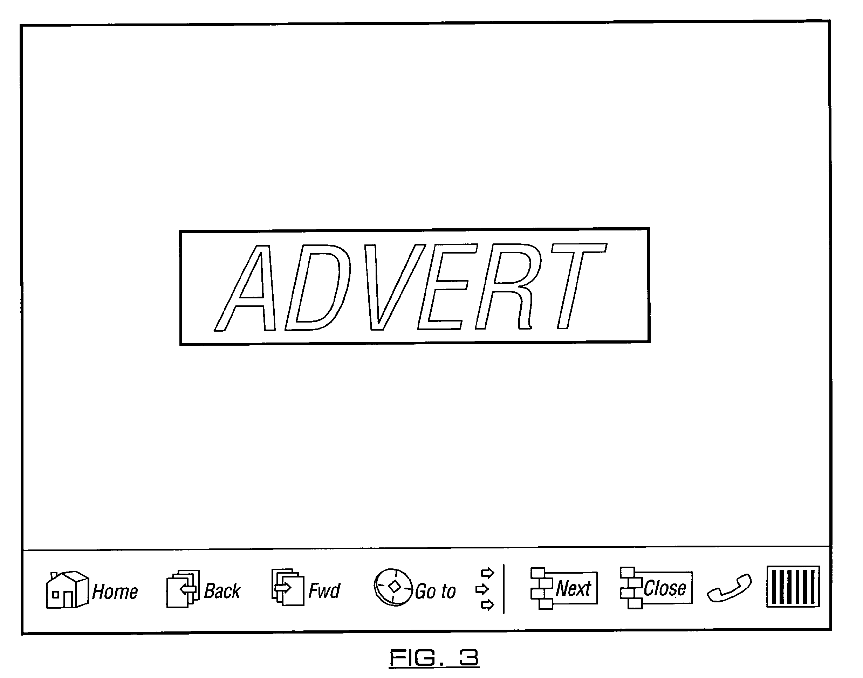

In one example, in use, the user of the system visits a popular search engine web page which allows the generation of a web page window as illustrated in Figure 1 and this page is displayed across the display screen. If the user then performs a search, the results are displayed, and the first item, the window with the page shown in Figure 2 is opened automatically across the display screen, thus replacing the search engine page window of Figure 1. However upon display of the page of Figure 2 the search engine or provider of the page of Figure 2 automatically generates a "pop-up" window in the form of an advert as shown in Figure 3 and this in turn will be displayed across the screen, replacing the page window of Figure 2, before the user has had the opportunity to properly view the page of Figure 2.

The user is then left with the situation where they can only view the most recently generated page of Figure 3 but does actually have three live pages available, two of which they can't view and may conventionally forget are available.

In accordance with the invention, the user can decide to see how many pages are open, and so selects to display the information display. The manner in which this request is made can be user or implementation defined but may, in one embodiment, be via the infra-red remote control handset used to control the television system and which has a dedicated key or key depression sequence for the information display function, which the user presses.

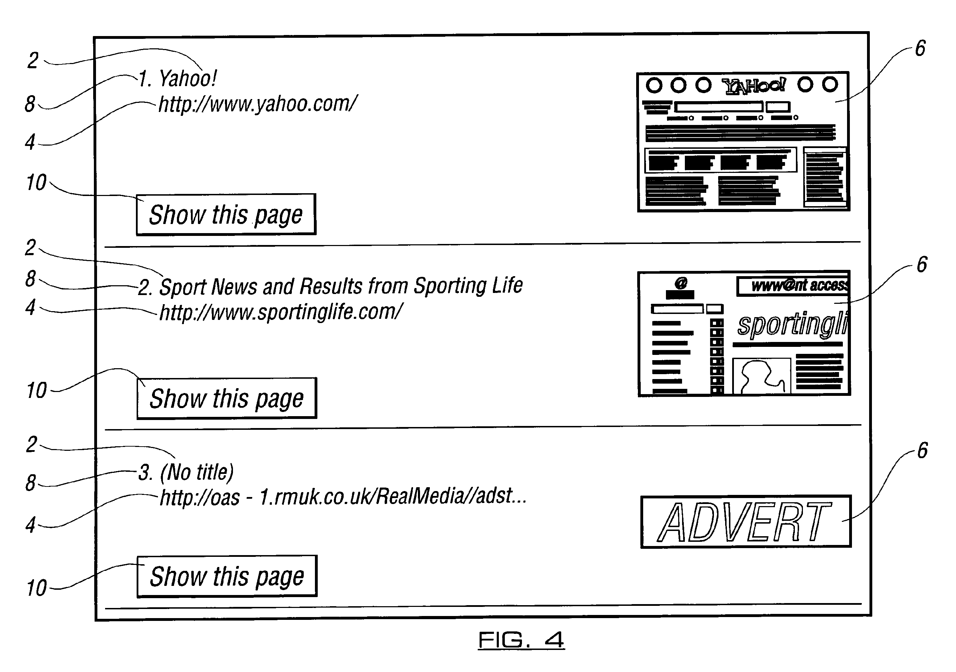

When the request is made and data received, the information display page as shown in Figure 4 is generated for display.

The information display page shown comprises the title 2 of the page, the URL or site address 6 and a thumbnail visual display 8 for each of the live page windows at that instant and so in this example has three groups of bibliographic data, one for each of the pages shown in Figures 1-3.

In order to further assist the user a number 8 is allocated to each entry and this number can be displayed when the individual pages are selected and displayed.

To select to view one of the pages across the screen, the user selects the "Show this page" button 10 relevant to the page to be shown. Note how the advert, with no title, is clearly visible as an advert from the thumbnail; and how the second page is very easily identified from the title shown, even if the user didn't recognise the thumbnail or URL. It is, then, the combination of all three methods, plus possibly the fourth - the numbers in the list - if the system user interface includes the numbers next to the pages when it displays them, that creates a strong association for the user between the three pages the device currently has available, and the items it has displayed in the information display.

The solution presented herein relies only on the fact that multiple pages are open at any one time, and not that they are necessarily concurrently visible. As long as the user can see or identify the pages through the system defined herein then internet capability mechanism, the site will be navigable.

Consequently, there is no attempt to continually update the display with each newly opened page window. Each window appears on its own, shown where possible and relevant at the required size, but always positioned centrally on screen. Any "dead Space" surrounding the page (if smaller than the available television screen display area) can be filled with some user-selectable background. This may be a plain colour, a repeating pattern, or maybe even a large image of some kind, and is analogous to "wallpaper" on a desktop PC.

In the event that fetching a selected page from the information display leads to an error - common problems are communication difficulties with the web server, a failure to handle some element of the page, or a paucity of RAM in the broadcast data receiver or embedded device itself - errors are displayed alongside the web page to which they relate on the information display. However this will not effect the users use of the internet system unless they choose to select the relevant page window.

In the example previously described the search has caused the opening of the page of Figure 3. While the generation of "pop-up" windows is desirable for some functions, such as login schemes, if an advert is subsequently generated, the user is likely to want to dismiss the advert and see the main or child page again as soon as possible. As the implementation of the system has a simple, selectable way of discarding the child pages (such as an on-screen button with an appropriate legend) then it is possible that the generation of the information display page of Figure 4 be selected for display as a default when the child page is shown. That way, the user just has to select the item to close the child, without needing any potentially tiresome prior navigation of the display.

The complexity of the system as a whole is increased by only a very small amount compared with a single page-only solution as the interface paradigms for the system are not unduly affected.

## Claims

1. A television system including a broadcast data receiver and an internet access capability, said capability, when accessed allowing the opening and retention of at least two windows of data for selected display on a display screen, each window displaying a page from an internet site and **characterised in that** upon the system user selecting and opening a window for viewing, an information display is generated by the system, said information display including a bibliography of data for each of the windows which are and selectable for viewing at that instant and said information display selectable by the user for viewing.

2. A television system according to claim 1 **characterised in that** the selection of the information display for viewing is made by the user depression of a designated key or keys of a remote control device for the apparatus of the system.

3. A television system according to claim 1 **characterised in that** the selection of the information display for viewing is made by the user selecting a particular icon displayed on screen using a remote control device.

4. A television system according to claim 1 where only one of the selectable windows is displayable on the screen at a time.

5. A television system according to claim 1 **characterised in that** each of the windows available for selection can be selected to be displayed in a sequential manner on the screen.

6. A television system according to claim 5 **characterised in that** the user can stop the sequential display to select to view one page for a longer period of time.

7. A television system according to claim 1 **characterised in that** the bibliographic data for each window is based on any, or any combination of, the title embedded in the HTML (Hyper-Text Mark-up Language), data comprising the page (if any), the location from which the page was fetched (its address or URL - Uniform resource Locator) and/or a scaled image view of the page.

8. A television system according to claim 7 **characterised in that** the scaled image, if provided, allows the user to predict the content of the window if selected for screen display.

9. A television system according to claim 8 **characterised in that** the scaled image is generated from data for the page held in a backing store memory provided in the broadcast data receiver.

10. A television system according to claim 1 **characterised in that** each of the windows available for display is allocated a unique identifier which is displayed in the information display page next to the appropriate bibliographic data and is displayed when the appropriate page has been selected for screen display.
